(19) Europäisches Patentamt
European Patent Office
Office européen des brevets

(11) Veröffentlichungsnummer: **0 413 662 A2**

# (12) EUROPÄISCHE PATENTANMELDUNG

(21) Anmeldenummer: **90810597.6**

(51) Int. Cl.5: **C08G 65/40**

(22) Anmeldetag: **07.08.90**

(30) Priorität: **15.08.89 CH 2974/89**

(43) Veröffentlichungstag der Anmeldung:
**20.02.91 Patentblatt 91/08**

(84) Benannte Vertragsstaaten:
**DE ES FR GB IT NL SE**

(71) Anmelder: **CIBA-GEIGY AG**
**Klybeckstrasse 141**
**CH-4002 Basel(CH)**

(72) Erfinder: **Pfaendner, Rudolf, Dr.**
**Sackgasse 3**
**D-6149 Rimbach/Odenwald 1(DE)**

## (54) Neue Polyarylenether.

(57) Polyarylenether, die bezogen auf die Gesamtmenge der im Polyetherharz vorhandenen Strukturelemente, 10-100 Mol-% eines wiederkehrenden Strukturelements der Formel I

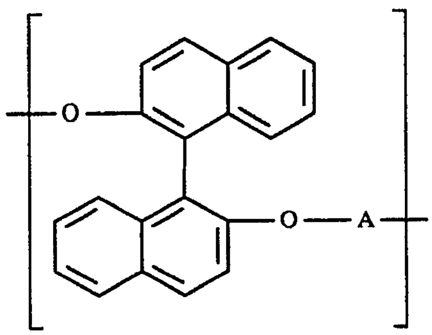

(I)

0-50 Mol-% eines wiederkehrenden Strukturelements der Formel II,

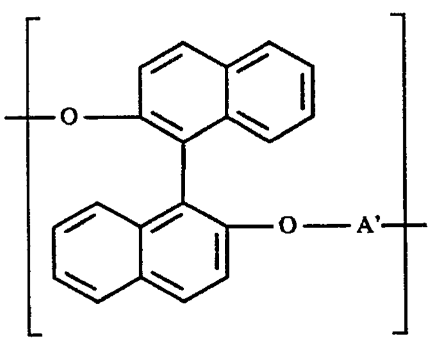

(II)

0-90 Mol-% eines wiederkehrenden Strukturelements der Formel III $\{O-A''-O-A\}$ (III) und 0-50 Mol-% eines wiederkehrenden Strukturelements der Formel IV $\{O-A''-O-A'\}$
enthalten, worin A eine Gruppe der Formeln Va oder Vb darstellt,

EP 0 413 662 A2

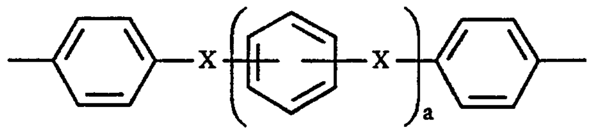

(Va)

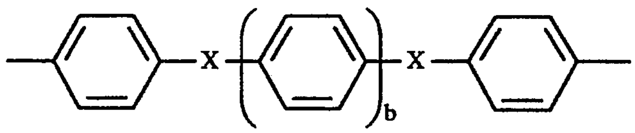

(Vb)

wobei X für-CO-, a für die Zahlen 0,1 oder 2 und b für die Zahlen 2oder3 stehen, ferner $A'$ eine Gruppe der Formeln VIa oder VIb darstellt,

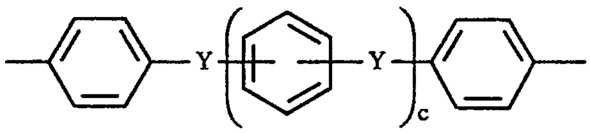

(VIa)

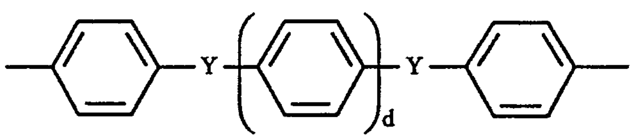

(VIb)

wobei Y für -SO- oder $-SO_2-$, c für die Zahlen 0 und 1 und d für die Zahl 2 stehen, und $A''$ eine Gruppe der Formeln VIIa bis VIIe darstellt,

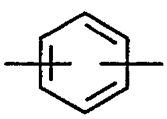 (VIIa), 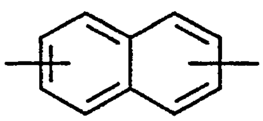 (VIIb),

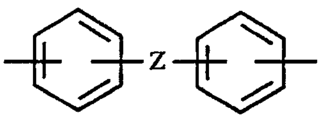 (VIIc), 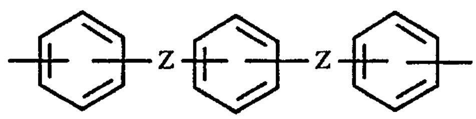 (VIId) oder

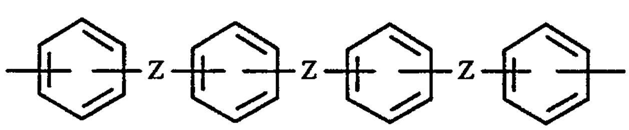 (VIIe),

wobei Z für eine direkte Bindung, $-C(CH_3)_2-$, $-C(CF_3)_2-$, -S-,-SO-, $-SO_2-$, -O-oder -CO-steht.

Diese technischen Werkstoffe zeichnen sich durch sehr gute mechanische und thermische Eigenschaften aus.

## NEUE POLYARYLENETHER

Die vorliegende Erfindung betrifft neue Polyarylenether, ein Verfahren zu deren Herstellung und deren Verwendung als technische Werkstoffe.

In EP-A 282096 wird die Synthese von Polyarylenether-ketonen und -sulfonen mit 1,1′-Bi-4-naphthoxy-Struktureinheiten beschrieben. Weiter sind aus M. Tokarzewska, J. Pol. Sci., Part A-1, Vol. 6,777-784, (1968) aliphatische-aromatische Polyether aus Diphenolen und Bis-(chlormethyl)-Derivaten bekannt, die Einheiten vom 2,2′-Dihydroxydinaphthyl-(1,1′)-Typ enthalten. Weiter sind in den JP Kokai's 213,219/86; 11,726/87 und 75,032/88 Polyetherketone mit Strukturelementen beschrieben, die sich von Naphthalindiolen ableiten.

Diese genügen nicht in aller Hinsicht den hohen Anforderungen, welche heute an ein hochwertiges thermoplastisches Harz gestellt werden. So befriedigt insbesondere der Glasübergangspunkt nicht, was zu ungenügender Wärmeformbeständigkeit oder allgemein nicht genügender thermischer Stabilität führt. Weiter ist die Lösungsmittelbeständigkeit ungenügend.

Aufgabe der vorliegenden Erfindung war es, Polyarylenether bereitzustellen, welche sich als technische Werkstoffe mit sehr guten mechanischen Eigenschaften eignen und gleichzeitig eine niedrige Schmelztemperatur, eine hohe Glasübergangstemperatur, eine hohe Lösungsmittelbeständigkeit und vorzugsweise Teilkristallinität aufweisen.

Ueberraschenderweise wird dies dadurch erreicht, dass in die Polyarylenether-keton-Kette Strukturelemente eingebaut werden, die sich vom 2,2′-Dihydroxydinaphthyl ableiten.

Die vorliegende Erfindung betrifft Polyarylenether, die bezogen auf die Gesamtmenge der im Polyetherharz vorhandenen Strukturelemente, 10-100 Mol-% eines wiederkehrenden Strukturelements der Formel I

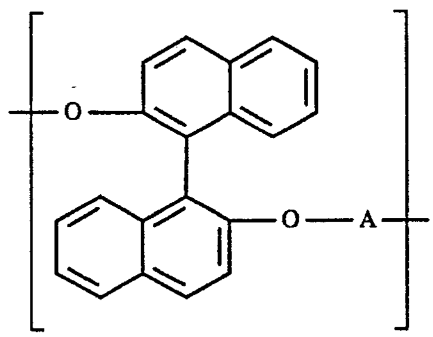

(I)

0-50 Mol-% eines wiederkehrenden Strukturelements der Formel II,

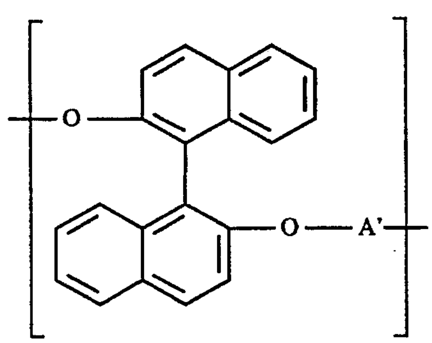

(II)

0-90 Mol-% eines wiederkehrenden Strukturelements der Formel III $\{O-A''-O-A\}$ (III)

und 0-50 Mol-% eines wiederkehrenden Strukturelements der Formel IV $\{O-A'''-O-A\}$ (IV)

enthalten, worin A eine Gruppe der Formeln Va oder Vb darstellt,

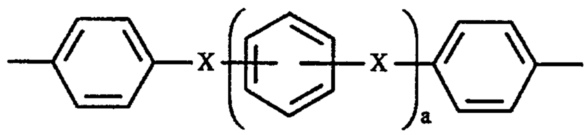

(Va)

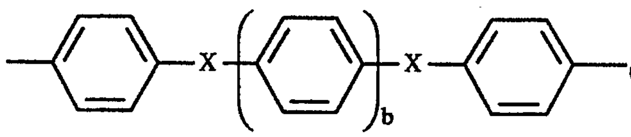

(Vb)

wobei X für-CO-, a für die Zahlen 0, 1 oder 2 und b für die Zahlen 2 oder 3 stehen, ferner A′ eine Gruppe der Formeln VIa oder VIb darstellt,

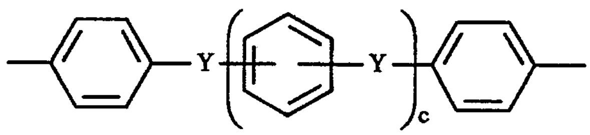

(VIa)

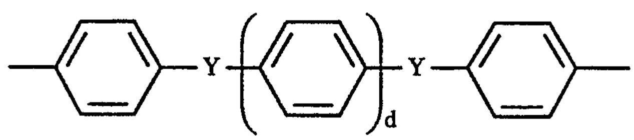

(VIb)

wobei Y für -SO- oder -$SO_2$-, c für die Zahlen 0 und 1 und d für die Zahl 2 stehen, und A″ eine Gruppe der Formeln VIIa bis VIIe darstellt,

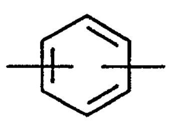 (VIIa), 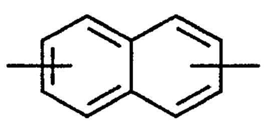 (VIIb),

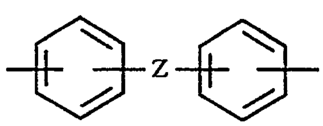 (VIIc), 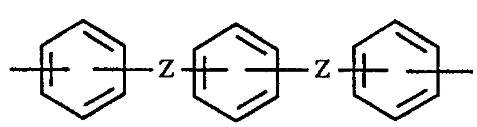 (VIId) oder

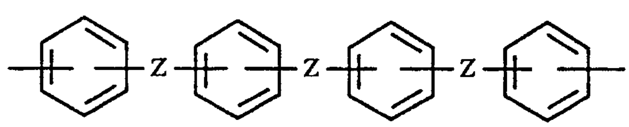 (VIIe),

wobei Z für eine direkte Bindung, -$C(CH_3)_2$-, -$C(CF_3)_2$-, -S-, -SO-, -$SO_2$-, -O- oder -CO-steht.

Vorzugsweise enthalten die erfindungsgemässen Polyarylenether 25-100 Mol-% eines wiederkehrenden Strukturelements der Formel I und 0-75 Mol-% eines wiederkehrenden Strukturelements der Formel III und/oder 0-50 Mol-% eines wiederkehrenden Strukturelements der Formel IV.

Besonders bevorzugte Polyarylenether sind die, worin A eine Gruppe der Formel Va, insbesondere worin a den Wert Null aufweist, bedeutet.

Ebenfalls bevorzugt sind Polyarylenether, worin A′ eine Gruppe der Formel VIa, insbesondere worin c den Wert Null aufweist, bedeutet.

Die bevorzugte Bedeutung von Y in den Formeln VIa und VIb ist -$SO_2$-.

Speziell bevorzugt sind Polyarylenether, worin A″ eine Gruppe der Formeln VIIa und/oder VIIc, mit Z in der Bedeutung von -CO- oder einer direkten Bindung, bedeutet.

Ganz von speziellem Interesse sind Polyarylenether, worin A in den Formeln I und/oderIII die Gruppe

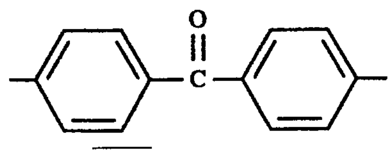

und $A'$ in den Formeln II und IV die Gruppe

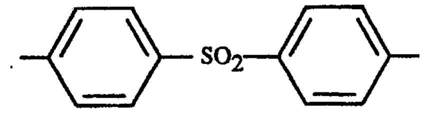

bedeuten.

Die erfindungsgemässen Polyarylenether können z.B. hergestellt werden, indem man eine Verbindung der Formeln VIIIa, VIIIb, IXa und/oder IXb

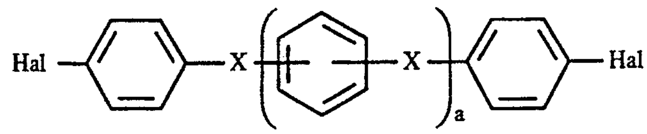

(VIIIa)

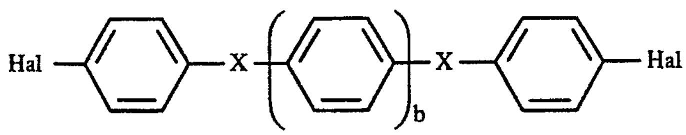

(VIIIb)

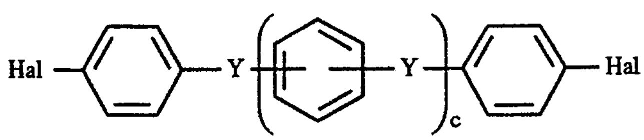

(IXa)

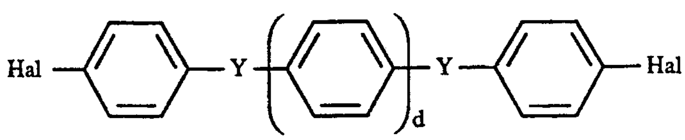

(IXb)

worin X, Y, a, b, c und d die oben angegebenen Bedeutungen haben und Hal für Halogen, insbesondere Fluor oder Chlor steht, mit 1,1′-Bi-2-naphthol allein, oder mit einem Gemisch aus dieser Verbindung und einem darin bis zu 90 Mol-% enthaltenen Diphenol der
Formel X,

$HO\text{-}A''\text{-}OH$ (X)

worin $A''$ die oben gegebene Bedeutung hat, in an sich bekannter Weise in Gegenwart alkalischer Katalysatoren in einem polaren aprotischen Lösungsmittel polykondensiert.

Anstelle des Diphenols der Formel X oder des 1,1′-Bi-2-naphthols können in an sich bekannter Weise auch die entsprechenden Alkali- oder Erdalkali-Phenolate, z.B. die Kalium- oder Calciumphenolate oder entsprechende Gemische, eingesetzt werden.

Ueblicherweise wird die Polykondensationsreaktion in etwa äquimolaren Verhältnissen der Verbindungen VIIIa, VIIIb, IXa, IXb: 1,1′-Bi-2-naphthol bzw. (1,1′-Bi-2-naphthol + X) durchgeführt. Unter etwa äquimolaren Mengen versteht man in diesem Zusammenhang ein Molverhältnis von 0,8:1,2 bis 1,2:0,8. Bevorzugt ist ein Molverhältnis von 0,95:1,05 bis 1,05:0,95.

Als alkalische Katalysatoren verwendet man in diesem Verfahren in der Regel Alkali- und Erdalkalicarbonate, wie Natrium-, Kalium- oder Calciumcarbonat oder deren Gemische; doch können auch andere alkalische Reagentien, wie Natriumhydroxid, Kaliumhydroxid oder Calciumhydroxid Verwendung finden.

Polare, aprotische Lösungsmittel, die beim Verfahren zur Herstellung der erfindungsgemässen Polyetherharze eingesetzt werden können, sind beispielsweise Dimethylsulfoxid, Dimethylacetamid, Diethylacetamid, Tetramethylharnstoff, N-Methylcaprolactam, N-Methylpyrrolidon und bevorzugt Diphenylsulfon.

Die Reaktion wird zweckmässig bei erhöhter Temperatur durchgeführt, vorzugsweise bis zur Rückfluss-Temperatur des Losungsmittels, also etwa bis 350 ° C.

Häufig empfiehlt sich die Mitverwendung eines Schleppmittels, wie z.B. Chlorbenzol, Xylol oder Toluol, um das bei der Umsetzung gebildete Wasser azeotrop aus dem Reaktionsgemisch entfernen zu können.

Die Verbindungen der Formeln VIIIa, VIIIb, IXa und IXb sind bekannt und zum Teil im Handel erhältlich. Geeignete Verbindungen dieser Formeln sind beispielsweise 4,4′-Difluorobenzophenon, 1,3-Bis-(4-fluorobenzoyl)benzol, 4,4′-Dichlorobenzophenon, 4,4′-Difluorodiphenylsulfon oder 4,4′-Dichlorodiphenylsulfon.

1,1′-Bi-2-naphthol ist bekannt und im Handel erhältlich.

Die Verbindungen der Formel X stellen auch bekannte Verbindungen dar, und sind grösstenteils im Handel erhältlich. Beispiele für geeignete zweiwertige Phenole der Formel VI sind Hydrochinon, Resorcin, 4,4′-Dihydroxydiphenyl; 4,4′-Dihydroxydiphenylether, 4,4′-Dihydroxydiphenylsulfon, 4,4′-Dihydroxybenzophenon, 4,4′-Dihydroxydiphenylmethan, 4,4′-Dihydroxydiphenylthioether, 2,2-Di-(4-hydroxyphenyl) propan oder Dihydroxynaphthalin.

Die erfindungsgemässen Polyetherharze können in der für Thermoplaste üblichen Weise eingesetzt und z.B. zu Formkörpern oder Folien verarbeitet werden, oder als Matrixharze, Klebstoffe oder Ueberzugsmittel eingesetzt werden. Vor der Verarbeitung der beispielsweise als Presspulver, Folie oder Schmelze vorliegenden Polyarylenether können übliche Zusatzstoffe, wie beispielsweise Füllstoffe, Pigmente, Stabilisatoren oder Verstärkungsmittel, wie Kohlenstoff-, Bor- oder Glasfasern, zugegeben werden. Eine weitere Anwendungsmöglichkeit für die erfindungsgemässen Polyarylenether besteht in der Modifizierung anderer Kunststoffe. Diese können grundsätzlich Thermoplaste oder Duromere sein.

Vorzugsweise eignen sich die erfindungsgemässen Polyarylenether als Matrixharze für die Herstellung von Faserverbundsystemen, wobei man als Verstärkungsfasern die üblichen bei der Verstärkung technischer Werkstoffe verwendeten Fasern einsetzen kann. Diese können organische oder anorganische Fasern, Naturfasern oder Synthesefasern, wie Aramid-Fasern sein, und als Faserbündel, als orientierte oder nichtorientierte Fasern oder als Endlosfasern vorliegen. Beispielsweise verwendet man als Verstärkungsfasern Glas-, Asbest-, Bor-, Kohlenstoff- und Metallfasern.

Wie die oben geschilderte Anwendungspalette zeigt, sind die erfindungsgemässen Polyarylenether breit als technische Werkstoffe einsetzbar.

Beispiele 1-6: In einem Rundkolben mit Rührer, Schutzgasanschluss und Destillationsbrücke wird unter Stickstoff eine Mischung aus 28,63 g (0,1000 Mol) 1,1′-Bi-2-naphthol, 75,68 g Diphenylsulfon, 15,53 g (0,1124 Mol) Kaliumcarbonat und 57,6 g Xylol bei einer Badtemperatur von 200 ° C erhitzt und ein Xylol/Wasser-Gemisch abdestilliert Gegen Ende der Destillation wird dabei kurzzeitig Vakuum (5 mbar) angelegt. Sodann werden 21,40g (0,0981 Mol) 4,4′-Difluorbenzophenon zu der Reaktionsmischung gegeben und die Temperatur mit 2 ° C/min auf 250 ° C erhöht und dort 1 Stunde belassen. Die Temperatur wird danach weiter auf 320 ° C gesteigert. Nach 1,5 Stunden erfolgt eine Zugabe von 0,49 g (0,0023 Mol) 4,4′-Difluorbenzophenon und nach weiteren 30 Minuten noch einmal 0,24g (0,0011 Mol) 4,4′-Difluorbenzophenon. Sodann wird die Temperatur auf 350 ° C erhöht und 3,5 Stunden beibehalten.

Nach Abkühlen wird die Reaktionsmischung dem Kolben entnommen, pulverisiert, mit 2 molarer Salzsäure versetzt, zunächst mit Wasser und dann mit Aceton extrahiert. Das so gereinigte Polymere wird im Vakummtrockenschrank bis zu einer Temperatur von 240 ° C getrocknet. Ein auf diese Weise hergegestelltes Polyetherketon mit Binaphthol-Einheiten besitzt eine durch DSC bestimmte Glasübergangstemperatur von 225 ° C und eine Schmelztemperatur von 310 ° C.

Die in der nachstehenden Tabelle angegebenen Beispiele 2-6 werden in analoger Weise hergestellt.

Die Polymeren sind unlöslich in Aceton, Methylenchlorid und nur in geringem Masse 1%) in N-Methylpyrrolidon, aber gelfrei löslich in konz. Schwefelsäure. Die Löslichkeit in konz. Schwefelsäure beweist das Vorliegen eines linearen, d.h. unvernetzten Polyetherketons.

Die Polymeren zeigen bei röntgenographischen Untersuchungen deutliche kristalline Anteile. Durch röntgenographische Untersuchung mittels Pulverdiffraktometrie (Pulverdiffraktometer Philips PW 1710) mit $CuK_{\alpha}$-Strahlung in Reflexionsgeometrie wurde die relative Kristallinität von ausgewählten Beispielen bestimmt. Aus den in der Tabelle 2 angegebenen Werten (Verhältnis kristalline Fläche zu kristalline und amorphe Fläche = Kristallinitätsgrad, Auswertung erfolgt gemäss C.-L. Ong, W.-L. Chung, M.-F. Sheu, J.-H. Lin 33rd Int. SAMPE Symposium, 1988 , S .1307) ist eindeutig erkennbar, dass (teil-)kristalline Polymere vorliegen.

Ein nach Beispiel 2 hergestelltes Polyetherketon wird in einer Plattenpresse bei 250 ° C mit einer Kraft von 3000 N während 10 Minuten gepresst. Man erhält einen flexiblen Film, der sich wiederholt ohne Bruch biegen und falten lässt. Der Film (Dicke: 0,13 mm) weist eine Zugfestigkeit von 60 MPa und eine

Bruchdehnung von 8 % auf (nach DIN 53455).

| Bsp. | Polyarylenether hergestellt aus | Reaktionsbedingungen | red. Viskosität [dl/g] | Tg [°C] DSC | Tm [°C] DSC |
|---|---|---|---|---|---|
| 1 | Polyetherketon<br>1,1'-Bi-2-naphthol (0,1000 mol)<br>4,4'-Difluorbenzophenon (0,1015 mol)<br>Kaliumcarbonat (0,1124 mol)<br>Diphenylsulfon (75,68 g)<br>Xylol (57,5 g) | 1 h/250°C<br>2,5 h/320°C<br>3,5 h/350°C | 0,35 | 225 | 310 |
| 2 | Polyetherketon-Copolymeres<br>1,1'-Bi-2-naphthol (0,0501 mol)<br>Hydrochinon (0,0502 mol)<br>4,4'-Difluorbenzophenon (0,1004 mol)<br>Kaliumcarbonat (0,0554 mol)<br>Calciumcarbonat (0,0575 mol) *)<br>Diphenylsulfon (100 g)<br>Toluol (61,72 g) - Destillation bei 150°C | 3 h/320°C | 0,86 | 184 | 209 |
| 3 | Polyetherketon-Copolymeres<br>1,1'-Bi-2-naphthol (0,0279 mol)<br>4,4'-Dihydroxybenzophenon (0,0281 mol)<br>4,4'-Difluorbenzophenon (0,0564 mol)<br>Kaliumcarbonat (0,0568 mol)<br>Calciumcarbonat (0,0568 mol) *)<br>Diphenylsulfon (107,15 g)<br>Xylol (65,75 g) | 1 h/250°C<br>1 h/320°C<br>1 h/350°C | 0,33 | 188 | 343 |

| Bsp. | Polyarylenether hergestellt aus | Reaktions-bedingungen | red. Viskosität [dl/g] | Tg [°C] DSC | Tm [°C] DSC |
|---|---|---|---|---|---|
| 4 | Polyetherketon-Copolymeres<br>1,1'-Bi-2-naphthol (0,0501 mol)<br>4,4'-Dihydroxybiphenyl (0,0500 mol)<br>4,4'-Difluorbenzophenon (0,1002 mol)<br>Kaliumcarbonat (0,0573 mol)<br>Calciumcarbonat (0,0665 mol) *)<br>Diphenylsulfon (68,97 g)<br>Xylol (68,18 g) | 1 h/250°C<br>1 h/320°C<br>1 h/350°C | 0,66 | 220 | 331 |

Tg/DSC, Tm/DSC: Heizrate 10°C/Minute

red. Visk.: 1 Gew.-% Polymeres in $H_2SO_4$ konz. bei 25°C, unmittelbar nach vollständiger Lösung

*) Kalium/Calciumcarbonat-Mischungen als Kondensationshilfsmittel bei der Herstellung aromatischer Polyether sind in DE 3342433 beschrieben

| Bsp. | Polyarylenether hergestellt aus | Reaktions-bedingungen | red. Viskosität [dl/g] | Tg [°C] DSC | Tm [°C] DSC |
|---|---|---|---|---|---|
| 5 | Polyetherketon-Copolymeres<br>1,1'-Bi-2-naphthol (0,0252 mol)<br>4,4'-Dihydroxybenzophenon (0,0751 mol)<br>4,4'-Difluorbenzophenon (0,1000 mol)<br>Kaliumcarbonat (0,1082 mol)<br>Diphenylsulfon (70,58 g)<br>Xylol (53 g)<br>(Bei der Aufarbeitung wurde abweichend von Beispiel 1 nicht mit Salzsäure, sondern mit Essigsäure versetzt) | 1 h/228°C<br>0,5 h/253°C<br>0,5 h/275°C<br>1 h/303°C<br>2 h/325°C | 0,68 | 203 | 350 |
| 6 | Polyetherketon-Copolymeres<br>1,1'-Bi-2-naphthol (0,0251 mol)<br>4,4'-Dihydroxybiphenyl (0,0751 mol)<br>4,4'-Difluorbenzophenon (0,1001 mol)<br>Kaliumcarbonat (0,1050 mol)<br>Diphenylsulfon (108,65 g)<br>Xylol (52,81 g)<br>(Bei der Aufarbeitung wurde abweichend von Beispiel 1 nicht mit Salzsäure, sondern mit Essigsäure versetzt) | 1 h/230°C<br>0,5 h/254°C<br>0,5 h/275°C<br>1 h/300°C<br>2 h/320°C | 0,55 | - | 391 |

Tabelle 2

| Relative Kristallinität der mit 1,1′-Bi-2-naphthol synthetisierten Polymeren | |
|---|---|
| Beispiel gemäss Tabelle 1 | Kristallinitätsgrad |
| 1 | nicht bestimmt |
| 2 | 0,24 |
| 3 | 0,46 |
| 4 | 0,47 |
| 5 | 0,35 |
| 6 | 0,39 |
| 7 | nicht bestimmt |
| 8 | 0,17 |
| 9 | 0,37 |

**Ansprüche**

1. Polyarylenether, die bezogen auf die Gesamtmenge der im Polyetherharz vorhandenen Strukturelemente, 10-100 Mol-% eines wiederkehrenden Strukturelements der Formel I

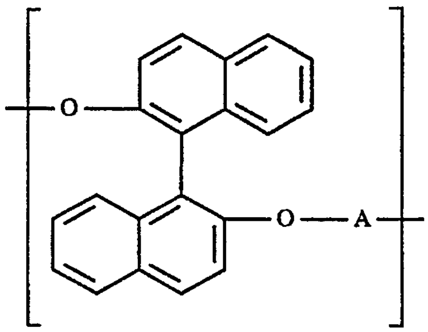

(I)

0-50 Mol-% eines wiederkehrenden Strukturelements der Formel II,

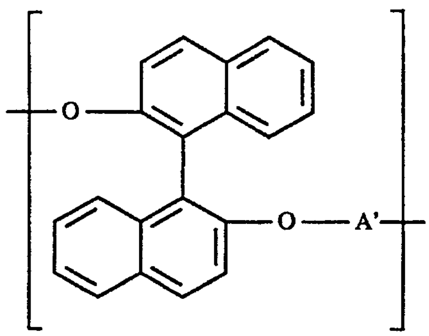

(II)

0-90 Mol-% eines wiederkehrenden Strukturelements der Formel III $\{O\text{-}A''\text{-}O\text{-}A\}$ (III) und 0-50 Mol-% eines wiederkehrenden Strukturelements der Formel IV $\{O\text{-}A''\text{-}O\text{-}A'\}$ (IV) enthalten, worin A eine Gruppe der Formeln Va oder Vb darstellt,

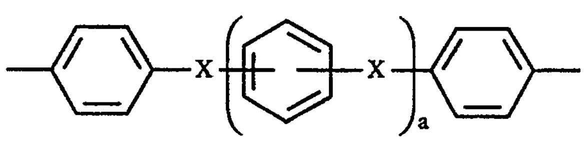

(Va)

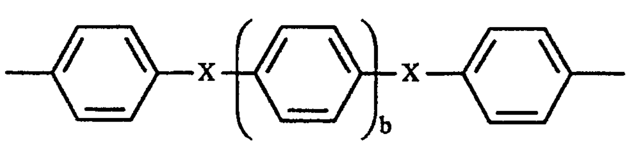

(Vb)

wobei X für -CO-, a für die Zahlen 0, 1 oder 2 und b für die Zahlen 2 oder 3 stehen, ferner A′ eine Gruppe der Formeln VIa oder VIb darstellt,

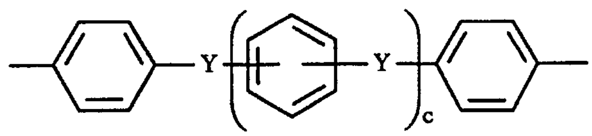 (VIa)

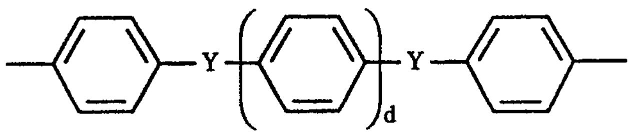 (VIb)

wobei Y für -SO- oder $-SO_2-$, c fürdie Zahlen 0 und 1 und dfürdie Zahl 2 stehen, und A″ eine Gruppe der Formeln V11a bis V11e darstellt,

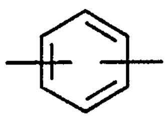 (VIIa), 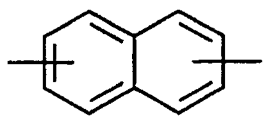 (VIIb),

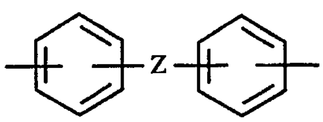 (VIIc), 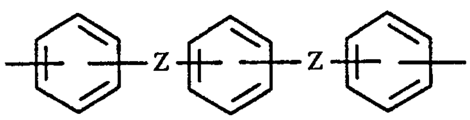 (VIId) oder

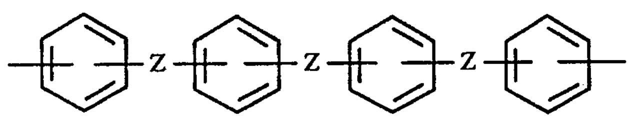 (VIIe),

wobei Z für eine direkte Bindung, $-C(CH_3)_2-$, $-C(CF_3)_2-$, -S-,-SO-, $-SO_2-$. -O- oder -CO-steht.

2. Polyarylenether gemäss Anspruch 1, die 25-100 Mol-u eines wiederkehrenden Strukturelements der Formel 1 und 0-75 Mol-% eines wiederkehrenden Strukturelements der Formel III und/oder 0-50 Mol-% eines wiederkehrenden Strukturelements der Formel IV enthalten.

3. Polyarylenether gemäss Anspruch 1, worin A eine Gruppe der Formel Va bedeutet.

4. Polyarylenether gemäss Anspruch 1, worin A′ eine Gruppe der Formel VIa bedeutet.

5. Polyarylenether gemäss Anspruch 4, worin Y $-SO_2-$ bedeutet.

6. Polyarylenether gemäss Anspruch 1, worin A″ in den Formeln III und/oder IV eine Gruppe der Formeln VIIa und/oder VIIc, mit Z in der Bedeutung von -CO- oder einer direkten Bindung, bedeutet.

7. Polyarylenether gemäss Anspruch 1, worin A die Gruppe

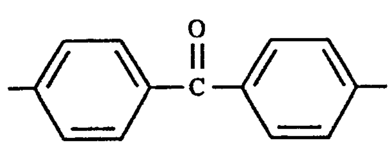

und A′ die Gruppe

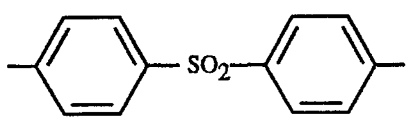

bedeuten.

8. Verfahren zum Herstellen von Polyarylenethern gemäss Anspruch 1, dadurch gekennzeichnet, dass man eine Verbindung der Formeln VIIIa, VIIIb, IXa und/oder IXb,

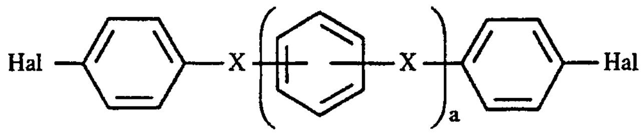

(VIIIa)

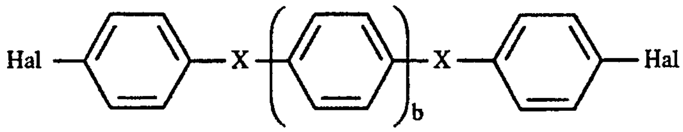

(VIIIb)

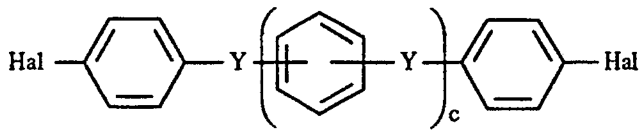

(IXa)

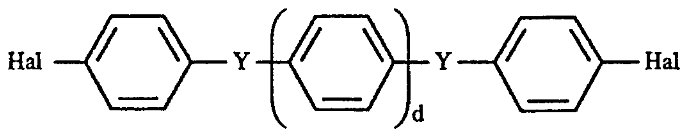

(IXb)

worin X, Y, a, b, c und d die oben angegebenen Bedeutungen haben und Hal für Halogen, insbesondere Fluor oder Chlor steht, mit 1,1′-Bi-2-naphthol allein, oder mit einem Gemisch aus dieser Verbindung und einem darin bis zu 90 Mol-% enthaltenen Diphenol der Formel X,

HO-A″-OH (X)

worin A″ die oben gegebene Bedeutung hat, in an sich bekannter Weise in Gegenwart alkalischer Katalysatoren in einem polaren aprotischen Lösungsmittel polykondensiert.

9. Verfahren gemäss Anspruch 8, wobei anstelle des Diphenols der Formel X oder des 1,1′-Bi-2-naphthols die entsprechenden Alkali- oder Erdalkali-Phenolate eingesetzt werden.

Patentansprüche für folgenden Vertragsstaat: ES

1. Verfahren zur Herstellung von Polyarylenethern, die bezogen auf die Gesamtmenge der im Polyetherharz vorhandenen Strukturelemente, 10-100 Mol-% eines wiederkehrenden Strukturelements der Formel I

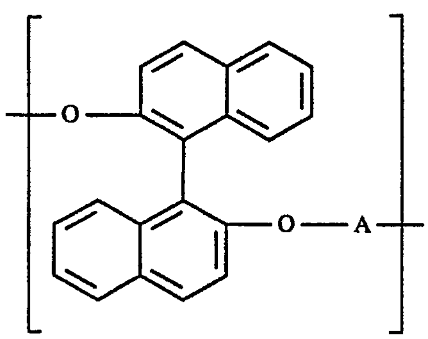

(I)

0-50 Mol-% eines wiederkehrenden Strukturelements der Formel II,

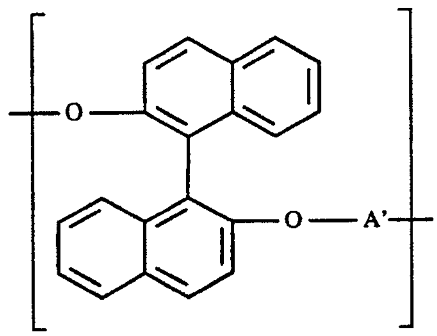

(II)

0-90 Mol-% eines wiederkehrenden Strukturelements der Formel III $\{O-A''-O-A\}$ (III) und 0-50 Mol-% eines wiederkehrenden Strukturelements der Formel IV $\{O-A''-O-A'\}$ (IV) enthalten, worin A eine Gruppe der Formeln Va oder Vb darstellt,

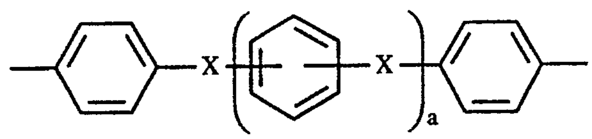

(Va)

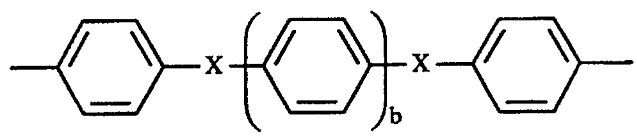

(Vb)

wobei X für -CO-, a für die Zahlen 0, 1 oder 2 und b für die Zahlen 2 oder 3 stehen, ferner A′ eine Gruppe der Formeln VIa oder VIb darstellt,

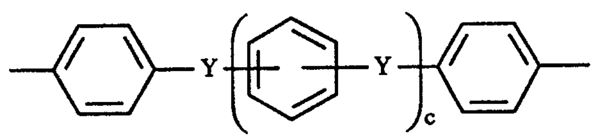

(VIa)

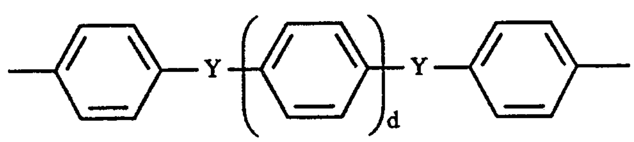

(VIb)

wobei Y für-SO- oder -$SO_2$-, c für die Zahlen 0 und 1 und d für die Zahl 2 stehen, und A″ eine Gruppe der Formeln VIIa bis VIIe darstellt,

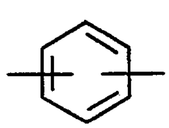 (VIIa), 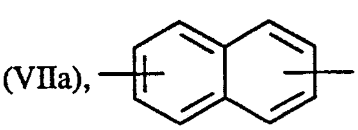 (VIIb),

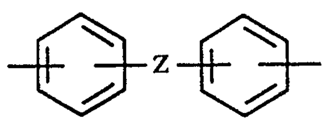 (VIIc), 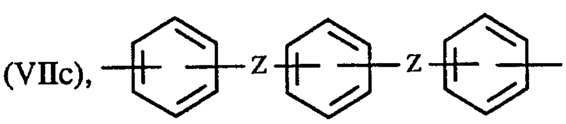 (VIId) oder

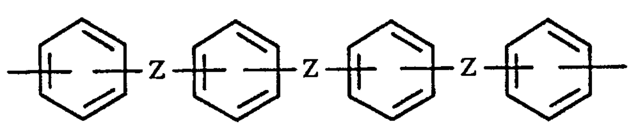 (VIIe),

wobei Z für eine direkte Bindung, $-C(CH_3)_2-$, $-C(CF_3)_2-$, -S-, -SO-, $-SO_2-$, -O- oder -CO-steht, dadurch gekennzeichnet, dass man eine Verbindung der Formeln VIIIa, VIIIb, IXa und/oder IXb,

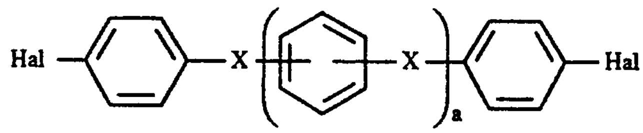
(VIIIa)

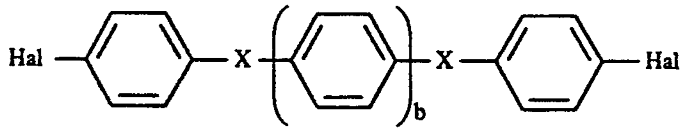
(VIIIb)

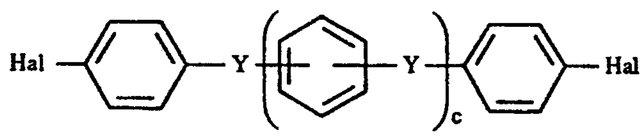
(IXa)

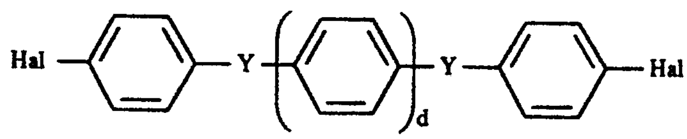
(IXb)

worin X, Y, a, b, c und d die oben angegebenen Bedeutungen haben und Hal für Halogen, insbesondere Fluor oder Chlor steht, mit 1,1′-Bi-2-naphthol allein, oder mit einem Gemisch aus dieser Verbindung und einem darin bis zu 90 Mol-% enthaltenen Diphenol der Formel X,

HO-A″-OH (X)

worin A″ die oben gegebene Bedeutung hat, in an sich bekannter Weise in Gegenwart alkalischer Katalysatoren in einem polaren aprotischen Lösungsmittel polykondensiert

2. Verfahren zur Herstellung von Polyarylenethern gemäss Anspruch 1, die 25-100 Mol-% eines wiederkehrenden Strukturelements der Formel I und 0.75 Mol-% eines wiederkehrenden Strukturelements der Formel III und/oder 0-50 Mol-% eines wiederkehrenden Strukturelements der Formel IV enthalten.

3. Verfahren zur Herstellung von Polyarylenethern gemäss Anspruch 1, worin A eine Gruppe der Formel Va bedeutet.

4. Verfahren zur Herstellung von Polyarylenethern gemäss Anspruch 1, worin A′ eine Gruppe der Formel VIa bedeutet.

5. Verfahren zur Herstellung von Polyarylenethern gemäss Anspruch 4, worin Y $-SO_2-$bedeutet.

6. Verfahren zur Herstellung von Polyarylenethern gemäss Anspruch 1, worin A″ in den Formeln III und/oder IV eine Gruppe der Formeln VIIa und/oder VIIc, mit Z in der Bedeutung von -CO- oder einer direkten Bindung, bedeutet.

7. Verfahren zur Herstellung von Polyarylenethern gemäss Anspruch 1, worin A die Gruppe

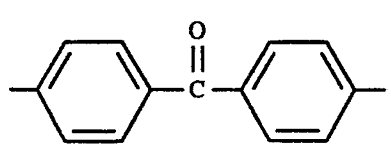

und A′ die Gruppe

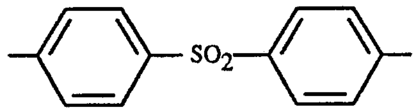

bedeuten.

8. Verfahren gemäss Anspruch 1, wobei anstelle des Diphenols der Formel X oder des 1,1′-Bi-2-naphthols die entsprechenden Alkali- oder Erdalkali-Phenolate eingesetzt werden.